(19) Europäisches Patentamt
European Patent Office
Office européen des brevets

(11) Veröffentlichungsnummer : **0 048 435**
**B1**

(12) # EUROPÄISCHE PATENTSCHRIFT

(45) Veröffentlichungstag der Patentschrift : **16.11.83**

(51) Int. Cl.³ : **C 01 B 25/38**, C 11 D 3/06

(21) Anmeldenummer : **81107300.6**

(22) Anmeldetag : **16.09.81**

(54) **Verfahren zur Herstellung von Granulaten kondensierter Phosphate.**

(30) Priorität : **23.09.80 DE 3035805**

(43) Veröffentlichungstag der Anmeldung : **31.03.82 Patentblatt 82/13**

(45) Bekanntmachung des Hinweises auf die Patenterteilung : **16.11.83 Patentblatt 83/46**

(84) Benannte Vertragsstaaten : **AT BE CH DE FR GB IT LI NL SE**

(56) Entgegenhaltungen :
**EP A 0 009 953**
**EP A 0 009 954**
**DE A 2 029 598**
**FR A 2 048 578**
**US A 2 568 110**
**US A 3 354 092**

(73) Patentinhaber : **HOECHST AKTIENGESELLSCHAFT**
**Postfach 80 03 20**
**D-6230 Frankfurt am Main 80 (DE)**

(72) Erfinder : **Wasel-Nielen, Horst-Dieter, Dr.**
**Giselherweg 1**
**D-5030 Hürth (DE)**
Erfinder : **Maurer, Alexander, Dr.**
**Am grünen Weg 7**
**D-5030 Hürth (DE)**
Erfinder : **Adrian, Renate**
**Grosse Ölbruchstrasse 29**
**D-5030 Hürth (DE)**

EP 0 048 435 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zur Herstellung von Granulaten kondensierter Phosphate

Die Erfindung betrifft ein Verfahren zur Herstellung von Granulaten wasserlöslicher kondensierter Phosphate der allgemeinen Formel $M_2O(MPO_3)_n$, in welcher M Natrium, Kalium oder Ammonium bedeutet und n eine Zahl zwischen 4 und 100 ist. Der $P_2O_5$-Gehalt dieser Verbindung umfaßt den Bereich von 60,4 bis 69,6 %.

Es ist bekannt, wasserlösliche kondensierte Phosphate vorstehender allgemeinen Formel — auch Schmelzphosphate genannt — als Bestandteil von Wasch- und Reinigungsmitteln zu verwenden. Entsprechende Reinigungsmittelformulierungen sind z. B. in EP-A-0 009 953 und EP-A-0 009 954 offenbart. Der Einsatz von beispielsweise kondensierten Alkaliphosphaten in Waschmittelformulierungen ist insofern vorteilhaft, als sie ein gutes Kalkbindevermögen sowie gute Schmutztrage- bzw. Peptisier- und Emulgiereigenschaften besitzen. Nachteilig ist dagegen die Hygroskopizität dieser Verbindungen, so daß Waschmittel mit einem Gehalt an Schmelzphosphaten beim Lagern durch Aufnahme von Feuchtigkeit der Luft zum Zusammenbacken tendieren. Diesem Nachteil versucht man gemäß EP-A-0 009 953 damit zu begegnen, daß man die Waschmittel in feuchtigkeitsundurchlässige Verpackungen einbringt.

Weitere Bemühungen, die Feuchtigkeitsempfindlichkeit wasserlöslicher Schmelzphosphate zu vermindern, gehen gemäß der USA-Patentschrift 2 568 110 dahin, das Schmelzphosphat in Granulatform zu bringen, indem eine wässerige, etwa 20-65 gew.-%ige Lösung des Schmelzphosphates mit einer wasserfreien, hydratisierbaren Substanz wie z. B. Natriumcarbonat, Dinatriumhydrogenphosphat oder Pentanatriumtriphosphat intensiv gemischt wird. Das Gemisch enthält etwa 5 bis 45 % Schmelzphosphat, 20 bis 90 % der wasserfreien Substanz, Rest Wasser, wobei die Wassermenge jedoch so zu bemessen ist, daß das fertige Gemisch ein festes Produkt darstellt. Aus vorstehenden Mischungsverhältnissen geht hervor, daß der Schmelzphosphatanteil im Gemisch relativ niedrig bzw. der Anteil der wasserfreien Komponente hoch ist. Im Falle des Einsatzes von $Na_2CO_3$ als wasserfreie Komponente wird dem Gemisch eine hohe Alkalität verliehen, die den Anwendungsbereich des Gemisches auf dem Waschmittelsektor stark begrenzt. Beim Ersatz des $Na_2CO_3$ durch beispielsweise Pentanatriumtriphosphat wird der Gesamtphosphatgehalt in einem unerwünschten Maße erhöht, so daß derartige Gemische nicht geeignet sind, als Bestandteil von Waschmittelformulierungen mit reduziertem Phosphatgehalt eingesetzt zu werden.

Aufgabe der vorliegenden Erfindung war es somit, wasserlösliche granulierte Schmelzphosphate herzustellen, unter Verwendung möglichst geringer Mengen von Granulierhilfsmitteln, die die waschaktiven Eigenschaften des Schmelzphosphates nicht negativ beeinflussen. Außerdem soll das hergestellte Granulat abriebfest sein. Granulate mit vorgenannten Eigenschaften werden nach dem Verfahren der Erfindung erhalten.

Gegenstand der Erfindung ist ein Verfahren zur Herstellung von Granulaten wasserlöslicher kondensierter Phosphate der allgemeinen Formel (I)

$$M_2O(MPO_3)_n \qquad (I)$$

in welcher M Natrium, Kalium oder Ammonium bedeutet und n eine Zahl zwischen 4 und 100 ist, bei dem man das pulverförmige wasserlösliche kondensierte Phosphat in Gegenwart von Wasser sowie einem von dem kondensierten Phosphat verschiedenen Phosphatsalz intensiv mischt und granuliert, das dadurch gekennzeichnet ist, daß man das kondensierte Phosphat der allgemeinen Formel (I) oder ein Gemisch dieses Phosphats mit einem wasserfreien oder teilhydratisierten Alkaliphosphat in Gegenwart von Wasser sowie einem Ammoniumpolyphosphat der allgemeinen Formel (II)

$$H_{(n-m)+2}(NH_4)_mP_nO_{3n+1} \qquad (II)$$

in welcher n einen ganzzahligen Durchschnittswert von 3 bis 1 000 ist, m eine ganze Zahl bis maximal n + 2 bedeutet und m/n zwischen 1,0 und 1,67 liegt, intensiv mischt und granuliert, wobei die eingesetzte Wassermenge 0,5 bis 5,0 Gew.-%, die Menge des Ammoniumpolyphosphates entsprechend der allgemeinen Formel (II) 0,003 bis 1 Gew.-% und die Menge des Alkaliphosphats Null bis 40 Gew.-%, jeweils auf die Menge des kondensierten Phosphats der allgemeinen Formel (I) bezogen, beträgt.

Ein weiterer Parameter zur Charakterisierung des kondensierten Phosphats der allgemeinen Formel (I) ist dessen $P_2O_5$-Gehalt, der 60,4 bis 69,6 Gew.-% beträgt.

Das erfindungsgemäß vorgeschlagene Alkaliphosphat ist vorzugsweise ein wasserfreies oder teilhydratisiertes Alkalitriphosphat, wie z. B. Pentanatriumtriphosphat, wobei der Anteil an Partikeln $< 0,1$ mm mindestens 50 % beträgt. Der Hydratisierungsgrad des teilweise hydratisierten Alkalitriphosphates beträgt im allgemeinen 1 bis 15 Gew.-%. Als Alkaliphosphate können aber auch wasserfreies oder teilhydratisiertes Tetranatriumdiphosphat bzw. Dinatriumhydrogenphosphat oder Trinatriumphosphat eingesetzt werden.

Nach einer weiteren bevorzugten Ausführungsform des Verfahrens der Erfindung besitzt der Parameter n in der allgemeinen Formel (II) einen ganzzahligen Durchschnittswert von 10 bis 1 000 und beträgt das Verhältnis von m zu n etwa 1.

Bei der Herstellung des erfindungsgemäßen Granulates hat sich die Einhaltung folgender Mengen an

Granulierhilfsmittel, jeweils bezogen auf das Produkt gemäß Formel (I), bewährt. Danach beträgt die Menge des Ammoniumpolyphosphates 0,04 bis 0,16 Gew.-%, die des Alkaliphosphats 0 bis 25 Gew.-% und die Wassermenge 2 bis 4 Gew.-%.

Die Durchführung des Verfahrens der Erfindung erlaubt verschiedene Verfahrensvarianten, welche darin bestehen, daß man zur Herstellung des Granulates

a) ein Gemisch aus dem kondensierten Phosphat und dem Ammoniumpolyphosphat bzw. ein Gemisch aus dem kondensierten Phosphat, dem Alkaliphosphat und dem Ammoniumpolyphosphat unter intensivem Mischen mit Wasser besprüht, oder

b) auf das vorgelegte kondensierte Phosphat bzw. das vorgelegte Gemisch aus dem kondensierten Phosphat und dem Alkaliphosphat eine wäßrige Lösung oder Suspension des Ammoniumpolyphosphats unter intensivem Mischen aufsprüht.

Schließlich besteht eine Verfahrensvariante darin, daß man das aus dem kondensierten Phosphat, dem Ammoniumpolyphosphat und Wasser hergestellte Granulat zusätzlich mit pulverförmigem Alkaliphosphat, insbesondere Alkalitriphosphat, oberflächlich bepudert.

Der nach der erfindungsgemäßen Arbeitsweise erzielte Effekt, bestehend in der Gewinnung abriebfester Granulate von Schmelzphosphaten, ist insofern überraschend, als man bisher grundsätzlich davon ausging, daß sich Wasser für die Granulierung von Schmelzphosphaten nicht eignen würde und in Anwendung von Wasser als Granulierhilfsmittel stets ein Zusammenbacken der Schmelzphosphatteilchen zu größeren Aggregaten eintreten würde. Dieses Vorurteil wird durch die Erfindung widerlegt. Im Vergleich zur Arbeitsweise nach dem US-Patent Nr. 2 568 110 besitzt die Erfindung unter anderem den Vorteil, daß sie mit einer wesentlich geringeren Menge an festem Granulierhilfsmittel die Granulierung von Schmelzphosphaten ermöglicht.

Das Verfahren der Erfindung wird durch die nachfolgenden Beispiele näher erläutert.

### Beispiel 1 (Vergleichsbeispiel)

In einer rotierenden Mischtrommel wurden 10 kg handelsübliches pulverförmiges Schmelzphosphat, dessen $P_2O_5$-Gehalt 68,1 % betrug, mit 0,10 kg Wasser in Form eines feinen Sprühnebels bedüst. Innerhalb weniger Minuten bildete sich an der Innenwand der Trommel eine festhaftende, klebrige Schicht von Schmelzphosphat, die als solche für den Einsatz in Wasch- und Reinigungsmittel nicht geeignet war.

### Beispiel 2

Auf einem rotierenden Drehteller wurde eine pulverförmige Mischung aus 25 kg handelsüblichem Schmelzphosphat mit einem $P_2O_5$-Gehalt von 68,1 % und 5 kg teilhydratisiertem Natriumtripolyphosphat mit einem Wassergehalt von 0,6 % und einem Feinanteil $< 0,1$ mm von 70 % innerhalb von 10 Minuten mit einer 4 gew.-%igen Lösung von Ammoniumpolyphosphat bedüst. Der $P_2O_5$-Gehalt des Ammoniumpolyphosphats betrug 72,5 % und die Menge des Phosphats 0,08 Gew.-%, bezogen auf die eingesetzte Menge an Schmelzphosphat. Es wurde ein hartes abriebfestes Granulat mit einer mittleren Korngröße von 0,5 mm erhalten. Nach 1-wöchiger Lagerung in einem dünnwandigen Plastikbeutel, der für Luftfeuchtigkeit durchlässig war, hatten sich nur wenige Agglomerate gebildet, die durch geringe mechanische Einwirkung in die Einzelgranulate zerfielen.

### Beispiel 3

Auf einem rotierenden Drehteller wurden 25 kg handelsübliches Schmelzphosphat mit einem $P_2O_5$-Gehalt von 68,1 % innerhalb von 10 Minuten mit einer 3 gew.-%igen Lösung von Ammoniumpolyphosphat besprüht. Der $P_2O_5$-Gehalt des Ammoniumpolyphosphats betrug 72,5 % und die Menge des Phosphats 0,07 Gew.-%, bezogen auf die Menge des Schmelzphosphats. Nach Beendigung der Flüssigkeitszugabe wurden dem Granulat 5 kg pulverförmiges Natriumtripolyphosphat zugesetzt und das Gemisch weitere 5 Minuten granuliert. Das erhaltene Granulat besaß folgende Korngrößenverteilung :

| | |
|---|---|
| Rückstand auf Sieb mit 2,0 mm Maschenweite | 1,2 % |
| Rückstand auf Sieb mit 1,6 mm Maschenweite | 4,0 % |
| Rückstand auf Sieb mit 0,8 mm Maschenweite | 30,4 % |
| Rückstand auf Sieb mit 0,4 mm Maschenweite | 54,8 % |
| Rückstand auf Sieb mit 0,2 mm Maschenweite | 73,9 % |
| Rückstand auf Sieb mit 0,1 mm Maschenweite | 86,7 % |
| Rückstand auf Sieb mit 0,05 mm Maschenweite | 98,1 % |

Die Kornfraktion zwischen 0,4 und 0,8 mm wurde einem Abriebtest nach der Trommelmethode unterworfen, wobei eine Abriebfestigkeit von 82,8 % ermittelt wurde. Nach 1-wöchiger Lagerung unter den gleichen Bedingungen wie in Beispiel 2 beschrieben, waren keine Zusammenbackungen der Granulatteilchen festzustellen.

Beispiel 4

Auf einem rotierenden Drehteller wurden 25 kg handelsübliches Schmelzphosphat mit einem $P_2O_5$-Gehalt von 68,1 % innerhalb von 7 Minuten mit einer 3 gew.-%igen wäßrigen Lösung von Ammoniumpolyphosphat besprüht. Der $P_2O_5$-Gehalt des Ammoniumpolyphosphats betrug 72,5 % und die Menge des Phosphats 0,08 Gew.-%, bezogen auf die Menge des Schmelzphosphats. Es wurde ein hartes abriebfestes Granulat mit einer mittleren Korngröße von 0,7 mm erhalten. Nach 3-wöchiger Lagerung unter den gleichen Bedingungen wie in Beispiel 2 beschrieben hatten sich nur wenige Agglomerate gebildet, die durch geringe mechanische Einwirkung in die Einzelgranulate zerfielen.

**Ansprüche**

1. Verfahren zur Herstellung von Granulaten wasserlöslicher, kondensierter Phosphate der allgemeinen Formel (I)

$$M_2O(MPO_3)_n \qquad (I)$$

in welcher M Natrium, Kalium oder Ammonium bedeutet und n eine Zahl zwischen 4 und 100 ist, bei dem man das pulverförmige wasserlösliche kondensierte Phosphat in Gegenwart von Wasser sowie einem von dem kondensierten Phosphat verschiedenen Phosphatsalz intensiv mischt und granuliert, dadurch gekennzeichnet, daß man das kondensierte Phosphat der allgemeinen Formel (I) oder ein Gemisch dieses Phosphats mit einem wasserfreien oder teilhydratisierten Alkaliphosphat in Gegenwart von Wasser sowie einem Ammoniumpolyphosphat der allgemeinen Formel (II)

$$H_{(n-m)+2}(NH_4)_mP_nO_{3n+1} \qquad (II)$$

in welcher n einen ganzzahligen Durchschnittswert von 3 bis 1 000 ist, m eine ganze Zahl bis maximal n + 2 bedeutet und m/n zwischen 1,0 und 1,67 liegt, intensiv mischt und granuliert, wobei die eingesetzte Wassermenge 0,5 bis 5,0 Gew.-%, die Menge des Ammoniumpolyphosphates entsprechend der allgemeinen Formel (II) 0,003 bis 1 Gew.-% und die Menge des Alkaliphosphates 0 bis 40 Gew.-%, jeweils auf die Menge des kondensierten Phosphats der allgemeinen Formel (I) bezogen, beträgt.

2. Verfahren nach Anspruch 1, dadurch gekennzeichnet, daß das kondensierte Phosphat der allgemeinen Formel (I) eine $P_2O_5$-Gehalt von 60,4 bis 69,6 Gew.-% aufweist.

3. Verfahren nach Anspruch 1 oder 2, dadurch gekennzeichnet, daß das Alkaliphosphat ein wasserfreies Alkalitriphosphat bzw. ein teilhydratisiertes Alkalitriphosphat ist, wobei der Anteil an Partikeln < 0,1 mm mindestens 50 % beträgt.

4. Verfahren nach Anspruch 3, dadurch gekennzeichnet, daß das teilweise hydratisierte Alkalitriphosphat zu 1 bis 15 Gew.-% hydratisiert und der Rest wasserfrei ist.

5. Verfahren nach Anspruch 1 bis 4, dadurch gekennzeichnet, daß in der allgemeinen Formel (II) n einen ganzzahligen Durchschnittswert von 10 bis 1 000 bedeutet und das Verhältnis von m zu n etwa 1 beträgt.

6. Verfahren nach Anspruch 1 bis 5, dadurch gekennzeichnet, daß die Menge des Ammoniumpolyphosphats 0,04 bis 0,16 Gew.-%, die Menge des Alkaliphosphats 0 bis 25 Gew.-% und die Wassermenge 2 bis 4 Gew.-%, jeweils bezogen auf das Produkt gemäß Formel (I), beträgt.

7. Verfahren nach Anspruch 1 bis 6, dadurch gekennzeichnet, daß man zur Herstellung des Granulats

a) ein Gemisch aus dem kondensierten Phosphat und dem Ammoniumpolyphosphat bzw. ein Gemisch aus dem kondensierten Phosphat, dem Alkaliphosphat und dem Ammoniumpolyphosphat unter intensivem Mischen mit Wasser besprüht, oder

b) auf das vorgelegte kondensierte Phosphat bzw. das vorgelegte Gemisch aus dem kondensierten Phosphat und dem Alkaliphosphat eine wäßrige Lösung oder Suspension des Ammoniumpolyphosphats unter intensivem Mischen aufsprüht.

8. Verfahren nach Anspruch 1 bis 7, dadurch gekennzeichnet, daß man das aus dem kondensierten Phosphat, dem Ammoniumpolyphosphat und Wasser hergestellte Granulat zusätzlich mit pulverförmigem Alkaliphosphat, insbesondere Alkalitriphosphat, oberflächlich bepudert.

**Claims**

1. Process for making granulated water-soluble, condensed phosphates of general formula (I)

$$M_2O(MPO_3)_n \qquad (I)$$

in which M stands for sodium, potassium or ammonium and n stands for a number between 4 and 100,

wherein the pulverulent, water-soluble, condensed phosphate is thoroughly mixed and granulated in the presence of water and of a phosphate salt other than the condensed phosphate, which comprises : thoroughly mixing and granulating the condensed phosphate of general formula (I) or a mixture of that phosphate with an anhydrous or partially hydrated alkali metal phosphate in the presence of water and an ammonium polyphosphate of general formula (II)

$$H_{(n-m)+2}(NH_4)_mP_nO_{3n+1} \qquad (II)$$

in which n stands for an integral average value of 3 to 1 000, m stands for a whole number of up to n + 2, and m/n is between about 1.0 and 1.67, the water being used in a proportion of 0.05 to 5.0 weight %, the ammonium polyphosphate of general formula (II) being used in a proportion of 0.003 to 1 weight %, and the alkali metal phosphate being used in proportion of 0 to 40 weight %, the percentages being in each case based on the quantity of the condensed phosphate of general formula (I).

2. Process as claimed in claim 1, wherein the condensed phosphate of general formula (I) contains 60.4 to 69.6 weight % of $P_2O_5$.

3. Process as claimed in claim 1 or 2, wherein the alkali metal phosphate is an anhydrous alkali metal triphosphate or partially hydrated alkali metal triphosphate consisting to an extent of at least 50 % of particles with a size of less than 0.1 mm.

4. Process as claimed in claim 3, wherein the partially hydrated alkali metal triphosphate is hydrated to an extent of 1 to 15 weight %, the balance being free from water.

5. Process as claimed in claims 1 to 4, wherein n in general formula (II) stands for an integral average value of 10 to 1 000 and the ratio of m/n is about 1.

6. Process as claimed in claims 1 to 5, wherein the ammonium polyphosphate is used in a proportion of 0.04 to 0.16 weigt %, the alkali metal phosphate is used in a proportion of 0 to 25 weight % and the water is used in a proportion of 2 to 4 weight %, the percentages being in each case based on the product of formula (I).

7. Process as claimed in claims 1 to 6, wheirein the granulate is made :

a) by spraying water with thorough agitation on to a mixture of the condensed phosphate and ammonium polyphosphate or on to a mixture of the condensed phosphate, alkali metal phosphate and ammonium polyphosphate or

b) by spraying with thorough agitation an aqueous solution or suspension of the ammonium polyphosphate on to the condensed phosphate or mixture of the condensed phosphate and alkali metal phosphate.

8. Process as claimed in claims 1 to 7, wherein the granulate made from the condensed phosphate, ammonium polyphosphate and water has an additional pulverulent alkali metal phosphate, especially alkali metal triphosphate, applied to its surface.

**Revendications**

1. Procédé de préparation de granulés de phosphates condensés hydrosolubles de formule générale (I)

$$M_2O(MPO_3)_n \qquad (I)$$

dans laquelle M représente le sodium, le potassium ou l'ammonium et n représente un nombre compris entre 4 et 100, dans lequel on mélange énergiquement et on granule le phosphate condensé hydrosoluble pulvérulent en présence d'eau et d'un sel phosphate autre que le phosphate condensé, caractérisé en ce que l'on mélange énergiquement et on granule le phosphate condensé de formule générale (I) ou un mélange de ce phosphate avec un phosphate alcalin anhydre ou partiellement hydraté en présence d'eau ainsi que d'un polyphosphate d'ammonium de formule générale (II)

$$H_{(n-m)+2}(NH_4)_mP_nO_{3n+1} \qquad (II)$$

dans laquelle n représente une valeur moyenne entière de 3 à 1 000, m est un nombre entier égal à n + 2 au maximum et le rapport m/n est compris entre 1,0 et 1,67, la quantité d'eau utilisée étant égale à 0,5-5,0 % en poids, celle du polyphosphate d'ammonium de formule générale (II) à 0,003-1 % en poids et celle du phosphate alcalin à 0-40 % en poids, les pourcentages étant chaque fois rapportés à la quantité du phosphate condensé de formule générale (I).

2. Procédé selon la revendication 1, caractérisé en ce que le phosphate condensé de formule générale (I) contient 60,4 à 69,6 % en poids de $P_2O_5$.

3. Procédé selon la revendication 1 ou 2, caractérisé en ce que le phosphate alcalin est un triphosphate alcalin anhydre ou un triphosphate alcalin partiellement hydraté consistant pour au moins 50 % en particules d'une granulométrie inférieure à 0,1 mm.

4. Procédé selon la revendication 3, caractérisé en ce que le triphosphate alcalin partiellement

hydraté est hydraté à raison de 1-15 % en poids, le complément étant anhydre.

5. Procédé selon les revendications 1 à 4, caractérisé en ce que, dans la formule générale (II), n représente une valeur moyenne entière de 10 à 1 000 et le rapport m/n est d'environ 1.

6. Procédé selon les revendications 1 à 5, caractérisé en ce que l'on utilise le polyphosphate d'ammonium à raison de 0,04-0,16 % en poids, le phosphate alcalin à raison de 0 à 25 % en poids et l'eau à raison de 2-4 % en poids, les pourcentages étant chaque fois rapportés au produit de formule générale (I).

7. Procédé selon les revendications 1 à 6, caractérisé en ce que, pour la préparation du granulé,

a) on projette en agitant énergiquement de l'eau sur un mélange du phosphate condensé et du polyphosphate d'ammonium ou sur un mélange du phosphate condensé, du phosphate alcalin et du polyphosphate d'ammonium, ou bien

b) on projette en agitant énergiquement une solution ou suspension du polyphosphate d'ammonium sur le phosphate condensé ou sur le mélange du phosphate condensé et du phosphate alcalin.

8. Procédé selon les revendications 1 à 7, caractérisé en ce que l'on applique sur la surface du granulé préparé à partir du phosphate condensé, du polyphosphate d'ammonium et d'eau une couche supplémentaire de phosphate alcalin pulvérulent, en particulier de triphosphate alcalin.